# EUROPÄISCHE PATENTSCHRIFT

(11) **EP 2 911 918 B1**
(45) Veröffentlichungstag und Bekanntmachung des Hinweises auf die Patenterteilung: **21.06.2017**
(21) Anmeldenummer: 13765665.8
(22) Anmeldetag: 11.09.2013
(51) Int. Cl.: B60R 22/195

(54) **SICHERHEITSGURTANORDNUNG FÜR EIN FAHRZEUG**
VEHICLE SEAT BELT SYSTEM
DISPOSITIF DE CEINTURE DE SÉCURITÉ POUR VÉHICULE

(30) Priorität: 27.10.2012 DE 102012021215
(43) Veröffentlichungstag der Anmeldung: 02.09.2015
(73) Patentinhaber: Volkswagen Aktiengesellschaft, 38440 Wolfsburg (DE)
(72) Erfinder: EFFENBERGER, Witali, 38176 Wendeburg (DE)
(86) Internationale Anmeldenummer: PCT/EP2013/068793
(87) Internationale Veröffentlichungsnummer: WO 2014/063861

(56) Entgegenhaltungen:
- DE-A1-102008 057 124
- JP-A- 2006 199 198
- JP-A- 2009 107 368

## Beschreibung

Die Erfindung betrifft ein Fahrzeug mit einer Sicherheitsgurtanordnung nach dem Oberbegriff des Patentanspruches 1.

Bei Crashtests erreichen Rückhaltesysteme an Vordersitzen in Kraftfahrzeugen mit einem Dreipunkt-Sicherheitsgurt herausragende Bewertungen, die nicht nur am Schultergurtabschnitt, sondern auch am, in Fahrzeugquerrichtung äußeren Anlenkpunkt des Beckengurtabschnittes einen Gurtstraffer aufweisen.

Aus der DE 2008 057 124 A1 ist eine solche Sicherheitsgurtanordnung bekannt, bei der der Beckengurtabschnitt des Sicherheitsgurtes an seinem, in der Fahrzeugquerrichtung äußeren Anlenkpunkt einen Gurtumlenker aufweist, über den der Beckengurtabschnitt zu einer Gurtstraffer-Einrichtung im Bereich eines Türschwellers geführt ist. Bei der aus der DE 10 2008 057 124 A1 bekannten Doppelstraffung wird insbesondere im Crashfall ein Kniekontakt zur Instrumententafel vermieden. Der im Türschweller angeordnete Gurtstraffer kann pyrotechnisch entzündbar sein und im Crashfall eine Gurtlose aus dem Beckengurtanteil ziehen und somit eine Beckenvorverlagerung des Fahrzeuginsassen reduzieren und dadurch die Insassenkinematik positiv beeinflussen. In der DE 10 2008 057 124 A1 ist der seitlich äußere Anlenkpunkt des Beckengurtabschnitts durch einen Gurtumlenker im Fußbereich der B-Säule gebildet. Die Gurtstraffereinrichtung ist dabei in Richtung Türeinstiegsbereich in der Fahrzeuglängsrichtung vorgelagert sowie von einem Verkleidungsteil sichtgeschützt überdeckt, das im Bereich des Türausschnittes eine Einstiegsleiste ist. Die Einstiegsleiste kann über ein Halteprofilteil unmittelbar am Türschweller befestigt sein.

Ein solcher zusätzlicher Gurtstraffer erhöht jedoch zwangsläufig den Bauraumbedarf im Türschwellerbereich beträchtlich, wodurch ein erforderlicher Freiraum in der Fahrzeugquerrichtung zwischen dem Türschweller und einem Fahrzeugsitz reduziert werden muss.

Aus der JP 2006-199198 ist ein gattungsgemäßes Fahrzeug mit einer Sicherheitsgurtanordnung bekannt. Hierbei ist ein Halteprofilteil an einem Türschweller angebracht. Eine den Türeinstiegsbereich begrenzende Einstiegsleiste begrenzt einen Bauraum, in dem eine Gurtstraffer-Einrichtung angeordnet ist.

Die Aufgabe der Erfindung besteht darin, ein Fahrzeug mit einer Sicherheitsgurtanordnung bereitzustellen, wobei die Sicherheitsgurtanordnung in kompakter Weise im Türschwellerbereich des Fahrzeuges verbaut ist.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass der im Türschwellerbereich verfügbare Bauraum stark beengt ist. Vor diesem Hintergrund kann das Halteprofilteil des Türschwellers nicht nur die, den Türeinstiegsbereich begrenzende Einstiegsleiste tragen, sondern in Doppelfunktion zusätzlich auch zwischen sich und einer darunter liegenden Fahrzeug-Bodengruppe einen Bauraum begrenzen, in dem die Gurtstraffer-Einrichtung angeordnet ist.

Erfindungsgemäß weist das den Gurtstraffer-Bauraum begrenzende Halteprofilteil eine erste Begrenzungswand auf, die über einen Querversatz vom Türschweller nach innen beabstandet ist und vertikal angeordnet ist. Zusätzlich weist das Halteprofilteil erfindungsgemäß eine zweite Begrenzungswand auf, die über einen Höhenversatz von der darunter liegenden Bodengruppe beabstandet ist und horizontal ausgerichtet ist. Die beiden Begrenzungswände können materialeinheitlich und einstückig ein in der Fahrzeuglängsrichtung langgestrecktes Winkelprofil bilden, bei dem die ersten und zweiten Begrenzungswände an einer in der Fahrzeuglängsrichtung entlanglaufenden Übergangskante zusammenlaufen.

Die horizontale Begrenzungswand des Halteprofilteiles kann dabei unmittelbar am Türschweller befestigt sein, während die vertikale Begrenzungswand an der Bodengruppe befestigt sein kann.

Der Türschweller kann als ein Hohlprofil-Blechteil ausgeführt sein, und zwar mit einem in etwa schalenförmigen Außenblechteil, das über Flanschverbindungen mit einem Innenblechteil zusammengefügt ist. Speziell am Innenblechteil des Schwellers kann das erfindungsgemäße Halteprofilteil befestigt sein.

Bei der erfindungsgemäßen Sicherheitsgurteinrichtung kann der oben erwähnte Gurtumlenker im Fußbereich einer Fahrzeugsäule angeordnet sein, über den der Beckengurtabschnitt zu der im Halteprofilteil angeordneten Gurtstraffer-Einrichtung geführt wird. Die Gurtstraffer-Einrichtung kann in etwa auf gleicher Höhe wie der Gurtumlenker positioniert sein sowie in der Fahrzeuglängsrichtung dem Gurtumlenker vorgelagert sein. Das um den Gurtumlenker geführte Ende des Beckengurtabschnittes kann an einer Koppelstelle mit einem Zugseil in Verbindung sein, das in Wirkverbindung mit der Gurtstraffer-Einrichtung ist. Hierzu ist es von Vorteil, wenn das Halteprofilteil eine in Richtung auf den Gurtumlenker offene Einführöffnung aufweist, durch die der Beckengurtabschnitt in Verbindung mit der Gurtstraffer-Einrichtung bringbar ist.

Die oben erwähnte Fahrzeug-Bodengruppe kann ein Sitzaufnahme-Blechteil mit einer, dem Fahrzeuginnenraum zugewandten horizontalen Montagefläche aufweisen. Auf diese Montagefläche wird ein Fahrzeugsitz montiert. Gleichzeitig kann die horizontale Montagefläche des Sitzaufnahmeblechteils den Gurtstraffer-Bauraum vertikal nach unten begrenzen. Auf diese Weise ist die Gurtstraffer-Einrichtung in einer nicht nur kompakten, sondern auch äußerst bauteilsteifen Blechteilanordnung integriert, bei der auch im Crashfall eine Funktionsfähigkeit des Gurtstraffers gewährleistet ist.

Für eine einfache sowie positionsgenaue Montage kann das Halteprofilteil an einer seiner Begrenzungswände Haltelaschen aufweisen. Die Haltelaschen hintergreifen in der Einbaulage des Halteprofilteils korrespondierende Ausnehmungen im Türschweller und/oder in der Bodengruppe formschlüssig. Zur Sicherung dieser Formschlussverbindung können Sicherungselemente, etwa Schraubelemente vorgesehen sein, mit denen zumindest die andere Befestigungswand des Halteprofilteils am Türschweller und/oder an der Bodengruppe festgeschraubt werden kann.

Das oben genannte Sitzaufnahmeblechteil kann ebenfalls ein Winkelprofilteil sein, bei dem die oben erwähnte horizontale Montagefläche an einer in der Fahrzeuglängsrichtung verlaufenden Übergangskante abgewinkelt einen vertikalen Stützschenkel übergeht, der auf einem Bodenblech des Fahrzeuges abgestützt ist. Das Bodenblech kann wiederum in der Fahrzeugquerrichtung nach außen bis unmittelbar an den Türschweller herangeführt und mit zum Beispiel dem Innenblechteil des Türschwellers verschweißt sein.

Bevorzugt kann das Halteprofilteil und die Gurtstraffer-Einrichtung bereits separat vom Fahrzeug zu einer Vormontageeinheit zusammengebaut sein, die dann in den Fahrzeug-Rohbau einsetzbar ist. Entsprechend ist die Gurtstraffer-Einrichtung nicht am Türschweller, sondern vielmehr am Halteprofilteil montiert und in der Einbaulage über einen freien Fügespalt vom Türschweller beabstandet, wodurch Montage- und Fertigungstoleranzen ausgleichbar sind.

Bevorzugt kann das Halteprofilteil zusätzlich auch Bestandteil einer seitlichen Aufnahmekontur für den Bodenbelag, etwa einem Teppichbelag, des Fahrzeuges sein. Hierzu kann die vertikale Begrenzungswand des Halteprofilteiles an ihrer, in der Fahrzeugquerrichtung inneren Seite eine Anlagefläche aufweisen, an die der Bodenbelag herangeführt ist. Weiterer Bestandteil dieser Aufnahmekontur kann die Einstiegsleiste sein, die in der Fahrzeugquerrichtung nach innen in einen Haltesteg übergeht. Der Haltesteg kann mit einem Abstand die Übergangskante und die vertikale Begrenzungswand des Halteprofilteiles unter Bildung einer Einstecknut umgreifen. Im Zusammenbauzustand kann der seitliche Rand des Bodenbelags in der Einstecknut sichtgeschützt eingelegt sein, die in der Fahrzeughochrichtung nach unten offen ist. Bei einer solchen Konstellation ist somit das Halteprofilteil vollständig von der Einsteckleiste sowie dem Bodenbelag sichtgeschützt überdeckt.

Zudem kann zwischen dem Halteprofilteil, insbesondere seiner horizontalen Begrenzungswand, und der Einstiegsleiste ein Montagekanal definiert sein, der entlang des Türschwellers in der Fahrzeuglängsrichtung verläuft und in dem zum Beispiel Bordnetzleitungen verlegbar sind.

Die vorstehend erläuterten und/oder in den Unteransprüchen wiedergegebenen, vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen näher erläutert.

Es zeigen:
- Fig. 1: in einer teilweisen perspektivischen Ansicht einen Vordersitz eines viertürigen Fahrzeuges im Einstiegsbereich, mit nur teilweise ersichtlichem Beckengurtabschnitt eines Dreipunkt-Sicherheitsgurtes;
- Fig. 2: eine im Türschwellerbereich angeordnete Gurtstraffer-Einrichtung für den Beckengurtabschnitt des Sicherheitsgurtes;
- Fig. 3: in einer Schnittdarstellung den Türschwellerbereich sowie die Gurtstraffer-Einrichtung in der Einbaulage; und
- Fig. 4: in einer perspektivischen Darstellung die Gurtstraffer-Einrichtung im Türschwellerbereich bei weggelassener Einstiegsleiste.

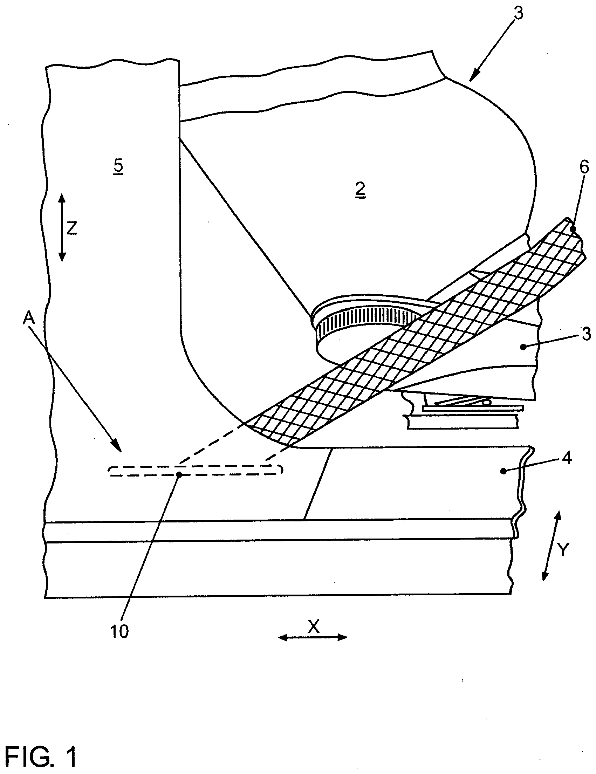

In der Fig. 1 ist abschnittsweise der Einstiegsbereich eines zum Beispiel viertürigen Fahrzeuges bei geöffneter vorderer Fahrzeugtür gezeigt, und zwar mit einem nur teilweise dargestellten Vordersitz 1, der eine Rückenlehne 2 sowie ein Sitzteil 3 aufweist.

Der nur teilweise ersichtliche Einstiegsbereich ist in der Fahrzeughochrichtung z nach unten durch eine in etwa horizontal verlaufende Einstiegsleiste 4 sowie in der Fahrzeuglängsrichtung x nach hinten durch die Verkleidung einer etwa vertikalen B-Säule 5 der Fahrzeugkarosserie begrenzt. Das Fahrzeug weist je Vordersitz 1 eine Dreipunkt-Sicherheitsgurtanordnung auf, die sich in bekannter Weise aus einem Beckengurtabschnitt 6 und einem nicht dargestellten Schultergurtabschnitt zusammensetzt. Der Schultergurtabschnitt kann etwa in der Kopfhöhe eines am Vordersitz 1 sitzenden Fahrzeuginsassen an der B-Säule 5 über einen ersten, nicht dargestellten Gurtstraffer angelenkt sein. Der Beckengurtabschnitt 6 verläuft im, in der Fig. 1 gezeigten angegurteten Zustand vom in etwa fahrzeugmittig angeordneten Gurtschloss über den Beckenbereich des Fahrzeuginsassen in der Fahrzeugquerrichtung y zu einem äußeren Anlenkpunkt A am Schweller 7, wobei der Gurtabschnitt 6 durch einen Führungsschlitz 10 der Verkleidung aus Kunststoff hindurchgeführt ist.

Die Einstiegsleiste 4 ist über ein später beschriebenes Halteprofilteil 15 am Türschweller 7 montiert. Dabei verläuft der Türschweller 7 sichtgeschützt unterhalb der Einstiegsleiste 4.

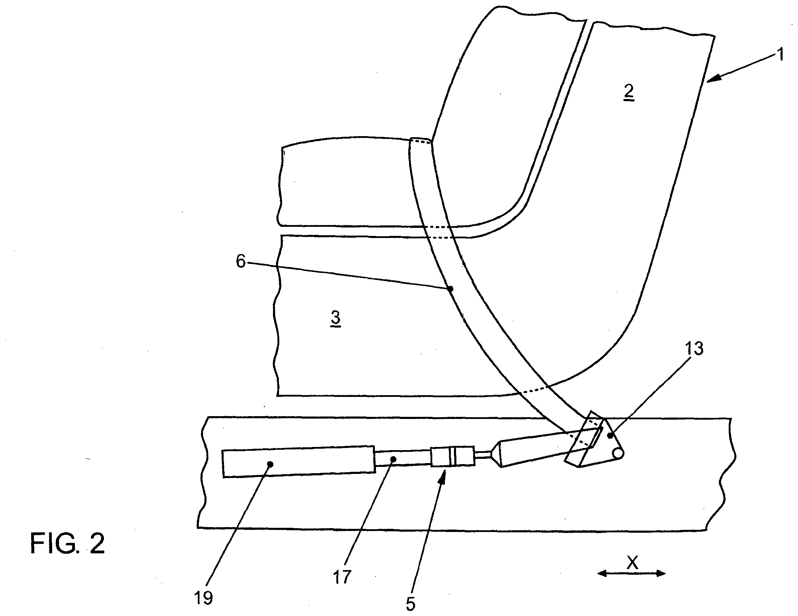

In der Fig. 2 ist grob schematisch der weitere Verlauf des Beckengurtabschnittes 6 unterhalb des Führungsschlitzes 10 dargestellt. Demzufolge wird der Beckengurtabschnitt 6 über einen Gurtumlenker 13, der im Fußbereich der B-Säule 5 angeordnet ist, in der Fahrzeuglängsrichtung x nach vorne umgelenkt. Das nach vorne umgelenkte Ende des Beckengurtabschnittes 6 wird an einer Kupplungsstelle 15 mit einem Zugseil 17 verlängert, das in Wirkverbindung mit der Gurtstraffereinrichtung 19 steht. Die Gurtstraffereinrichtung 19 kann im Crashfall pyrotechnisch aktiviert werden, wodurch über das Zugseil 17 eine Zugkraft auf den Beckengurtabschnitt 6 ausgeübt wird und dieser gestrafft wird.

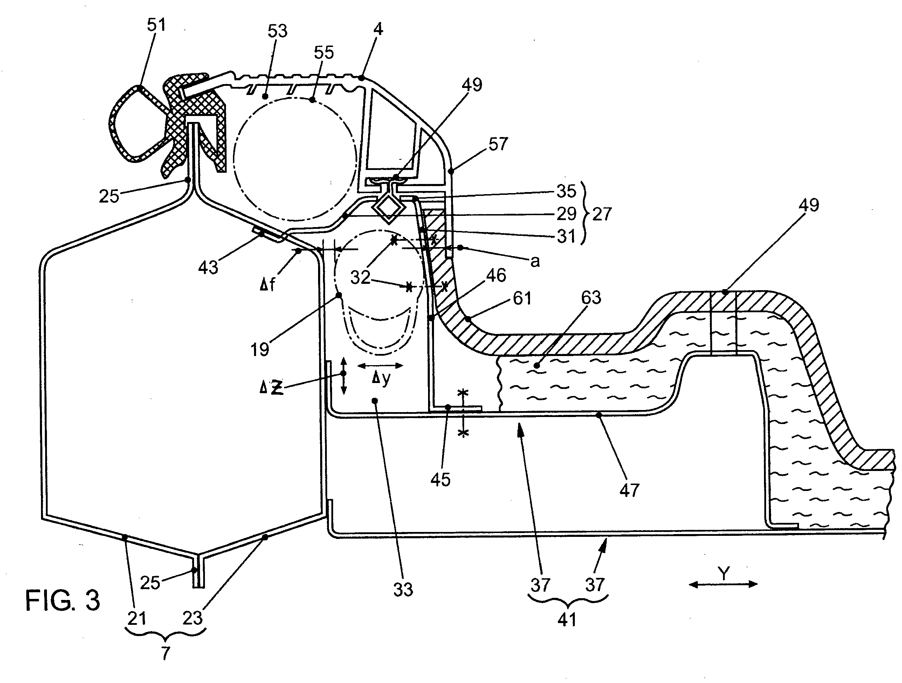

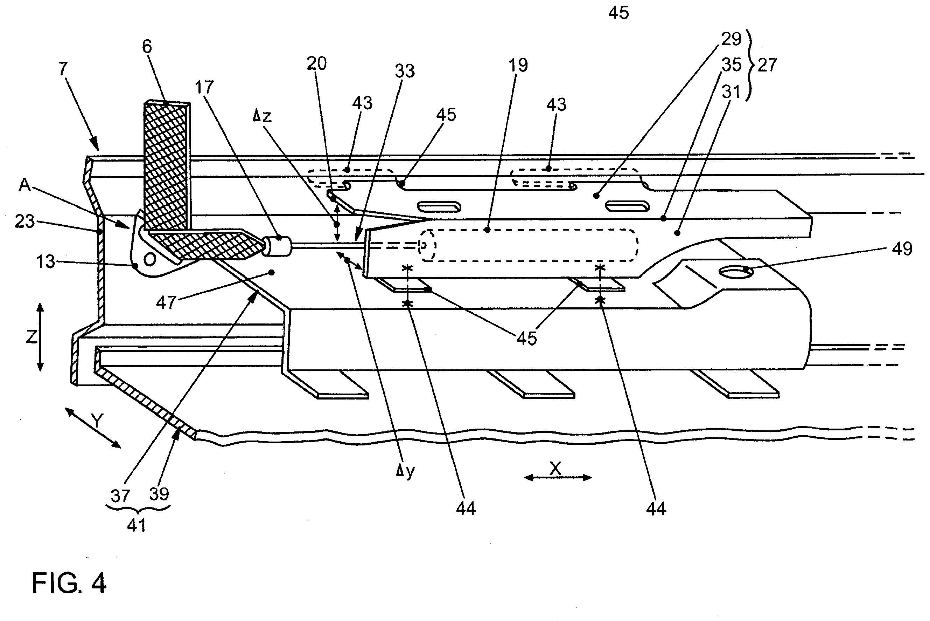

Anhand der folgenden Fig. 3 und 4 ist die Einbaulage der Gurtstraffer-Einrichtung 19 dargestellt. Im vorliegenden Ausführungsbeispiel ist die Gurtstraffer-Einrichtung 19 eine pyrotechnisch betätigbare Kolben-Zylinder-Einheit, die bei Aktivierung die bereits oben erwähnte Zugkraft auf den Beckengurtabschnitt 6 ausübt und im Bereich des Türschwellers 7 vorgesehen ist.

Der Türschweller 7 ist gemäß der Fig. 3 ein, den nicht dargestellten Fahrzeuglängsträger verlängerndes Hohlprofilteil mit einem in der Fahrzeugquerrichtung y außenliegenden Außenblechteil 21 und einem in der Fahrzeugquerrichtung y innenliegenden Innenblechteil 23, die beide schalenförmig ausgebildet sind und an ihren einander zugewandten Rändern über Flanschverbindungen 25 miteinander punktverschweißt sind. Am Innenblechteil 23 des Türschwellers 7 ist ein Tragprofilteil 27 befestigt, an dessen Oberseite die, das Innenblechteil 23 überdeckende Einstiegsleiste 4 angeordnet ist. In der Fig. 3 ist das Tragprofilteil 27 als ein, in der Fahrzeuglängsrichtung x langgestrecktes Winkelprofil ausgebildet, dessen Winkelschenkel 29, 31 Begrenzungswände für einen Bauraum 33 bilden, in dem die Gurtstraffer-Einrichtung 19 angeordnet ist. Hierzu ist in der Fig. 3 die obere, in etwa horizontal angeordnete Begrenzungswand 29 um einen Höhenversatz Δz von einer darunter liegenden Bodengruppe 41 des Fahrzeuges beabstandet, während die in etwa vertikal ausgerichtete Begrenzungswand 31 in der Fahrzeugquerrichtung y um einen Querversatz Δy von dem Innenblechteil 23 des Türschwellers 7 beabstandet ist. Die beiden Begrenzungswände 29, 31 gehen an einer Übergangskante 35 ineinander über und sind an ihren freien Enden jeweils am Türschweller 7 und an einem Sitzaufnahme-Blechteil 37 befestigt. Das Sitzaufnahme-Blechteil 37 bildet zusammen mit dem Bodenblech 39 und weiteren hier nicht dargestellten Blechteilen eine Bodengruppe 41 des Fahrzeuges.

Zur lagerichtigen Befestigung des Halteprofilteiles 27 sind an dessen horizontaler Begrenzungswand 29 Haltelaschen 43 angeformt. Diese hintergreifen in der, in der Fig. 3 und 4 dargestellten Einbaulage den Randbereich von korrespondierenden Ausnehmungen 45 (Fig. 4) im Innenblechteil 23 formschlüssig. Zur Sicherung dieser Formschlussverbindung ist die vertikale Begrenzungswand 31 nach unten mit zwei abgewinkelten Schraubkonsolen 45 versehen, die über angedeutete Schraubverbindungen 44 mit einer horizontalen Montagefläche 47 des Sitzaufnahme-Blechteils 37 verschraubt sind. Entsprechend bildet die horizontale Montagefläche 47 eine untere Begrenzung des Bauraumes 33 für die Gurtstraffer-Einrichtung 19.

Zusätzlich sind auf der horizontalen Montagefläche 47 der Sitzaufnahme-Blechteile 37 Schraubpunkte 49 vorgesehen, auf die ein nicht gezeigter Fahrzeugsitz verschraubbar ist.

Wie aus der Fig. 3 weiter hervorgeht, ist die Einstiegsleiste 7 über einen separaten Steckverbinder 49 fest mit der horizontalen Begrenzungswand 29 des Trägerprofilteiles 27 verbunden. Die Einstiegsleiste 7 ist an ihren, in der Fahrzeugquerrichtung y außenseitigen Ende über ein Türdichtungsprofil 51 zudem auf der oberen Flanschverbindung 25 des Türschwellers 7 befestigt. Auf diese Weise ergibt sich zwischen der Unterseite der Einstiegsleiste 7 und der Oberseite der horizontalen Begrenzungswand 29 ein in der Fahrzeuglängsrichtung x langgestreckter Montagekanal 53, in dem ein angedeuteter Bordnetz-Leitungsstrang 55 verlegt ist.

An dem, in der Fahrzeugquerrichtung y nach innen ragenden Ende geht die Einstiegsleiste 7 gemäß der Fig. 3 in einen nach unten abragenden Haltesteg 57 über. Der Haltesteg 57 umgreift mit einem Nutabstand a die Übergangskante 35 sowie die vertikale Begrenzungswand 31 des Halteprofilteiles 27. Auf diese Weise ergibt sich ein in der Fahrzeughochrichtung z nach unten offener Einsteckspalt 59, in dem der Rand eines Bodenbelages 61 eingeklemmt ist. Hierzu ist der Rand des Bodenbelags 61 seitlich nach oben hochgezogen sowie in Anlage geführt mit der Innenseite 46 der vertikalen Begrenzungswand 31 des Halteprofilteiles 27. Der Bodenbelag 61 liegt zudem über ein nur angedeutetes Dämmungsteil 63 auf der Bodengruppe 41 des Fahrzeuges.

Wie aus der Fig. 3 weiter hervorgeht, ist die Gurtstraffer-Einrichtung 19 über nicht näher gezeigte Schraubverbindung 32 mit der vertikalen freien Begrenzungswand 31 des Halteprofilteiles 27 verschraubt, und zwar mit einem vorgegebenen Fügeabstand Δf zum Innenblechteil 23 des Türschwellers 7. Auf diese Weise kann die Gurtstraffer-Einrichtung 19 und das Halteprofilteil 27 separat von der Fahrzeug-Karosserie zu einer Vormontageeinheit zusammengefügt und anschließend in den Fahrzeug-Rohbau eingesetzt werden.

## Patentansprüche

1. Fahrzeug mit einer Sicherheitsgurtanordnung, wobei die Sicherheitsgurtanordnung einen Sicherheitsgurt aufweist, der einen Schultergurtabschnitt und einen Beckengurtabschnitt (6) aufweist, der an seinem in der Fahrzeugquerrichtung (y) äußeren Anlenkpunkt (A) einen Gurtumlenker (13) aufweist, über den der Beckengurtabschnitt (6) zu einer Gurtstraffer-Einrichtung (19) im Bereich eines Türschwellers (7) geführt ist, wobei der Türschweller (7) ein Halteprofilteil (27) aufweist, das eine den Türeinstiegsbereich begrenzende Einstiegsleiste (4) trägt, **dadurch gekennzeichnet, dass** zwischen dem Halteprofilteil (27) und einer darunter liegenden Bodengruppe (41) des Fahrzeuges ein Bauraum (33) gebildet ist, in dem die Gurtstraffer-Einrichtung (19) angeordnet ist und dass das Halteprofilteil (27) den Bauraum (33) für die Gurtstraffer-Einrichtung (19) mit einer, mit einem Querversatz (Δy) vom Türschweller (7) beabstandeten vertikalen Begrenzungswand (31) und mit einer, mit einem Höhenversatz (Δz) von der Bodengruppe (41) beabstandeten horizontalen Begrenzungswand (29) begrenzt.

2. Fahrzeug mit einer Sicherheitsgurtanordnung nach Anspruch 1, **dadurch gekennzeichnet, dass** das Halteprofilteil (27) ein in der Fahrzeuglängsrichtung (x) langgestrecktes Winkelprofil ist, und zwar insbesondere mit an einer Übergangskante (35) zusammenlaufenden horizontalen und vertikalen Begrenzungswänden (29, 31).

3. Fahrzeug mit einer Sicherheitsgurtanordnung nach Anspruch 1 oder 2, **dadurch gekennzeichnet, dass** die horizontale Begrenzungswand (29) am Türschweller (7) befestigt ist und/oder die vertikale Begrenzungswand (31) an der Bodengruppe (41) befestigt ist.

4. Fahrzeug mit einer Sicherheitsgurtanordnung nach einem der vorhergehenden Ansprüche, **dadurch gekennzeichnet, dass** der Gurtumlenker (13) im Fußbereich einer Fahrzeugsäule (5) angeordnet ist und die Gurtstraffer-Einrichtung (19) dem Gurtumlenker (13) in der Fahrzeuglängsrichtung (x) vorgelagert ist, und dass das Halteprofilteil (27) eine in Richtung auf den Gurtumlenker (13) offene Einführöffnung (20) begrenzt, durch die der Beckengurtabschnitt (6) in Verbindung mit der Gurtstraffer-Einrichtung (19) gebracht ist.

5. Fahrzeug mit einer Sicherheitsgurtanordnung nach einem der vorhergehenden Ansprüche, **dadurch gekennzeichnet, dass** die Bodengruppe (41) ein Sitzaufnahmeblechteil (37) mit einer dem Fahrzeuginnenraum zugewandten horizontalen Montagefläche (47) aufweist, auf die ein Fahrzeugsitz (1) montierbar ist, und dass der Bauraum (33) vertikal nach unten durch das Sitzaufnahmeblechteil (37) begrenzt ist.

6. Fahrzeug mit einer Sicherheitsgurtanordnung nach einem der vorhergehenden Ansprüche, **dadurch gekennzeichnet, dass** an zumindest einer der Begrenzungswände (29, 31) Haltelaschen (43) ausgebildet sind, die in der Einbaulage des Halteprofilteils (27) den Türschweller (7) und/oder die Bodengruppe (41) formschlüssig hintergreifen, und dass zur Sicherung dieser Formschlussverbindung zumindest ein Schraubelement (44) vorgesehen ist, mit dem zumindest die andere Befestigungswand (29, 31) an dem Türschweller (7) und/oder der Bodengruppe (41) festschraubbar ist.

7. Fahrzeug mit einer Sicherheitsgurtanordnung nach einem der vorhergehenden Ansprüche, **dadurch gekennzeichnet, dass** die vertikale Begrenzungswand (31) des Halteprofilteils (27) auf ihrer in der Fahrzeugquerrichtung (y) inneren Seite eine Anlagefläche (46) für einen Bodenbelag (61), etwa einen Teppichbelag, der Bodengruppe (41) aufweist.

8. Fahrzeug mit einer Sicherheitsgurtanordnung nach Anspruch 7, **dadurch gekennzeichnet, dass** die Einstiegsleiste (4) in der Fahrzeugquerrichtung (y) nach innen in einen Haltesteg (57) übergeht, der mit einem Abstand (a) die Übergangskante (35) und die vertikale Begrenzungswand (31) unter Bildung einer Einstecknut (59) umgreift, in die ein Rand des Bodenbelags (61) eingelegt ist.

9. Fahrzeug mit einer Sicherheitsgurtanordnung nach einem der vorhergehenden Ansprüche, **dadurch gekennzeichnet, dass** zwischen dem Halteprofilteil (27), insbesondere seiner horizontalen Begrenzungswand (29), und der Einstiegsleiste (4) ein Montagekanal (53) definiert ist, in dem Bordnetzleitungen (55) verlegbar sind.

## Claims

1. Vehicle with a seat belt arrangement, wherein the seat belt arrangement has a seat belt which has a shoulder belt portion and a lap belt portion (6) which, at its outer coupling point (A) in the transverse direction (y) of the vehicle, has a belt deflector (13) via which the lap belt portion (6) is guided to a belt-tensioner device (19) in the region of a door sill (7), wherein the door sill (7) has a retaining profile part (27) which bears an entry strip (4) bounding the door entry region, **characterized in that** a construction space (33) in which the belt-tensioner device (19) is arranged is formed between the retaining profile part (27) and a vehicle floor assembly (41) located below the latter, and **in that** the retaining profile part (27) bounds the construction space (33) for the belt-tensioner device (19) with a vertical boundary wall (31) spaced apart with a transverse offset (Δy) from the door sill (7) and with a horizontal boundary wall (29) spaced apart with a height offset (Δz) from the floor assembly (41).

2. Vehicle with a seat belt arrangement according to Claim 1, **characterized in that** the retaining profile part (27) is an angular profile which is elongate in the longitudinal direction (x) of the vehicle, specifically in particular with horizontal and vertical boundary walls (29, 31) converging at a transition edge (35).

3. Vehicle with a seat belt arrangement according to Claim 1 or 2, **characterized in that** the horizontal boundary wall (29) is fastened to the door sill (7), and/or the vertical boundary wall (31) is fastened to the floor assembly (41).

4. Vehicle with a seat belt arrangement according to one of the preceding claims, **characterized in that** the belt deflector (13) is arranged in the foot region of a vehicle pillar (5), and the belt-tensioner device (19) is mounted upstream of the belt deflector (13) in the longitudinal direction (x) of the vehicle, and **in that** the retaining profile part (27) bounds an insertion opening (20) which is open in the direction of the belt deflector (13) and through which the lap belt portion (6) is brought into connection with the belt-tensioner device (19).

5. Vehicle with a seat belt arrangement according to one of the preceding claims, **characterized in that** the floor assembly (41) has a seat receptacle sheet-metal part (37) with a horizontal mounting surface (47) which faces the vehicle interior and onto which a vehicle seat (1) can be mounted, and **in that** the construction space (33) is bounded vertically downwards by the seat receptacle sheet-metal part (37).

6. Vehicle with a seat belt arrangement according to one of the preceding claims, **characterized in that** retaining tabs (43) are formed on at least one of the boundary walls (29, 31), said retaining tabs reaching in a form-fitting manner behind the door sill (7) and/or the floor assembly (41) in the fitting position of the retaining profile part (27), and **in that**, in order to secure said form-fitting connection, at least one screw element (44) is provided with which at least the other fastening wall (29, 31) can be firmly screwed to the door sill (7) and/or to the floor assembly (41).

7. Vehicle with a seat belt arrangement according to one of the preceding claims, **characterized in that** the vertical boundary wall (31) of the retaining profile part (27) has, on its inner side in the transverse direction (y) of the vehicle, a contact surface (46) for a floor covering (61), for example a carpet covering, of the floor assembly (41).

8. Vehicle with a seat belt arrangement according to Claim 7, **characterized in that** the entry strip (4) merges inwards in the transverse direction (y) of the vehicle into a retaining web (57) which engages at a distance (a) around the transition edge (35) and the vertical boundary wall (31), with the formation of a plug-in groove (59) into which an edge of the floor covering (61) is inserted.

9. Vehicle with a seat belt arrangement according to one of the preceding claims, **characterized in that** a mounting channel (53) in which on-board electrical system lines (55) can be laid is defined between the retaining profile part (27), in particular the horizontal boundary wall (29) thereof, and the entry strip (4).

## Revendications

1. Véhicule comportant un dispositif de ceinture de sécurité, dans lequel le dispositif de ceinture de sécurité présente une ceinture de sécurité, qui présente une partie de ceinture scapulaire et une partie de ceinture ventrale (6), qui comporte à son point d'articulation extérieur (A) dans la direction transversale (y) du véhicule un déviateur de ceinture (13), par lequel la partie de ceinture ventrale (6) est guidée vers un système de tendeur de ceinture (19) dans la région d'un seuil de portière (7), dans lequel le seuil de portière (7) présente une pièce profilée de maintien (27), qui porte une moulure de seuil (4) qui limite une zone de montée à bord, **caractérisé en ce qu'**un espace de montage (33) est formé entre la pièce profilée de maintien (27) et le groupe de plancher sous-jacent (41) du véhicule, espace dans lequel le système de tendeur de ceinture (19) est disposé et **en ce que** la pièce profilée de maintien (27) limite l'espace de montage (33) pour le système de tendeur de ceinture (19) avec une paroi de limitation verticale (31) espacée du seuil de portière (7) avec un décalage transversal (Δy) et avec une paroi de limitation horizontale (29) espacée du groupe de plancher (41) avec un décalage en hauteur (Δz).

2. Véhicule avec un dispositif de ceinture de sécurité selon la revendication 1, **caractérisé en ce que** la pièce profilée de maintien (27) est une cornière profilée allongée dans la direction longitudinale (x) du véhicule, notamment en particulier avec des parois de limitation horizontale et verticale (29, 31) se rejoignant à une arête de transition (35).

3. Véhicule avec un dispositif de ceinture de sécurité selon la revendication 1 ou 2, **caractérisé en ce que** la paroi de limitation horizontale (29) est fixée au seuil de portière (7) et/ou la paroi de limitation verticale (31) est fixée au groupe de plancher (41).

4. Véhicule avec un dispositif de ceinture de sécurité selon l'une quelconque des revendications précédentes, **caractérisé en ce que** le déviateur de ceinture (13) est disposé dans la région du pied d'une colonne de véhicule (5) et le système de tendeur de ceinture (19) est monté avant le déviateur de ceinture (13) dans la direction longitudinale (x) du véhicule, et **en ce que** la pièce profilée de maintien (27) limite une ouverture d'introduction (20) ouverte en direction du déviateur de ceinture (13), à travers laquelle la partie de ceinture ventrale (6) est mise en liaison avec le système de tendeur de ceinture (19).

5. Véhicule avec un dispositif de ceinture de sécurité selon l'une quelconque des revendications précédentes, **caractérisé en ce que** le groupe de plancher (41) présente une pièce en tôle de pose de siège (37) avec une face de montage horizontale (47) tournée vers l'espace intérieur du véhicule, sur laquelle un siège de véhicule (1) peut être monté, et **en ce que** l'espace de montage (33) est limité verticalement vers le bas par la pièce en tôle de pose de siège (37).

6. Véhicule avec un dispositif de ceinture de sécurité selon l'une quelconque des revendications précédentes, **caractérisé en ce que** des pattes de retenue (43) sont formées sur au moins une des parois de limitation (29, 31), qui dans la position de montage de la pièce profilée de maintien (27) s'accrochent à l'arrière par emboîtement au seuil de portière (7) et/ou au groupe de plancher (41), et **en ce qu'**il est prévu pour le blocage de cette liaison par emboîtement au moins un élément de vis (44), avec lequel au moins l'autre paroi de fixation (29, 31) peut être attachée au seuil de portière (7) et/ou au groupe de plancher (41).

7. Véhicule avec un dispositif de ceinture de sécurité selon l'une quelconque des revendications précédentes, **caractérisé en ce que** la paroi de limitation verticale (31) de la pièce profilée de maintien (27) présente sur son côté intérieur dans la direction transversale (y) du véhicule une face d'appui (46) pour un revêtement de sol (61), par exemple un tapis de sol, du groupe de plancher (41).

8. Véhicule avec un dispositif de ceinture de sécurité selon la revendication 7, **caractérisé en ce que** la moulure de seuil (4) se prolonge vers l'intérieur dans la direction transversale (y) du véhicule en une entretoise de maintien (57), qui entoure à une distance (a) l'arête de transition (35) et la paroi de limitation verticale (31) en formant une rainure d'engagement (59), dans laquelle un bord du revêtement de sol (61) est inséré.

9. Véhicule avec un dispositif de ceinture de sécurité selon l'une quelconque des revendications précédentes, **caractérisé en ce qu'**un canal de montage (53) est défini entre la pièce profilée de maintien (27), en particulier sa paroi de limitation horizontale (29), et la moulure de seuil (4), dans lequel des câbles du réseau de bord (55) peuvent être posés.
